## Europäisches Patentamt
## European Patent Office
## Office européen des brevets

(19)

(11) Numéro de publication: **0 036 814 B1**

(12) **FASCICULE DE BREVET EUROPEEN**

(45) Date de publication du fascicule du brevet:
**30.11.83**

(51) Int. Cl.³: **G 02 B 7/26**

(21) Numéro de dépôt: **81400441.2**

(22) Date de dépôt: **20.03.81**

(54) Manchon d'accouplement de connecteur pour monofibre optique, et connecteur muni d'un tel manchon.

(30) Priorité: **25.03.80 FR 8006613**

(43) Date de publication de la demande:
**30.09.81 Bulletin 81/39**

(45) Mention de la délivrance du brevet:
**30.11.83 Bulletin 83/48**

(84) Etats contractants désignés:
**DE GB IT**

(56) Documents cités:
**FR - A - 2 299 655**

**MACHINE DESIGN, vol. 52, no. 1, janvier 1980, Ohio, US**
**"Scanning the field for ideas", page: circle 131**

(73) Titulaire: **SOCAPEX, 10 bis, quai Léon Blum,**
**F-92153 Suresnes (FR)**

(72) Inventeur: **Collignon, Roger, THOMSON-CSF**
**SCPI 173, Bld Haussmann, F-75360 Paris Cedex 08 (FR)**
Inventeur: **Bouygues, Jean, THOMSON-CSF**
**SCPI 173, Bld Haussmann, F-75360 Paris Cedex 08 (FR)**

(74) Mandataire: **Vesin, Jacques et al, THOMSON-CSF**
**SCPI 173, Bld Haussmann, F-75379 Paris Cedex 08 (FR)**

## Manchon d'accouplement de connecteur pour monofibre optique, et connecteur muni d'un tel manchon

La présente invention se rapporte au domaine des connecteurs pour monofibre optique et concerne particulièrement ceux dans lesquels les deux extrémités de la ligne optique à raccorder sont respectivement munies d'un embout cylindrique.

La monofibre est fixée dans un canal percé axialement dans l'embout, et débouche sur une base du cylindre constituant la face de contact de l'empbout.

Le raccordement proprement dit s'effectue par mise en vis-à-vis, avec appui mutuel, des deux faces de contact respectives des embouts, leurs axes de révolution étant aligués avec précision pour une transmission optique avec pertes minimales. A titre d'exemple, cette précision, pour une monofibre de diamètre de l'ordre de 100 µ, doit être de l'ordre de $\pm 3$ µ.

Le raccordement des embouts s'effectue fréquemment par mise en œuvre d'une pièce supplémentaire, en forme de manchon cylindrique creux, dans lequel on fait pénétrer les deux embouts sur une certaine longueur. Cependant, si l'alignement est théoriquement réalisable entre embouts dont les diamètres extérieurs respectifs sont identiques, le manchon d'accouplement étant alors de diamètre intérieur constant, en pratique il peut en être autrement, les diamètres des embouts, de fabrications ou de provenances diverses, pouvant présenter des différences notables.

Pour remédier à ces différences, on a proposé de doter le manchon d'accouplement de pinces de serrage à chaque extrémité, par exemple du type dit »à trois mors«.

Par action positive sur les bagues commandant le serrage des pinces, il est ainsi possible simultanément d'une part de compenser les différences de diamètre des embouts, et d'autre part d'assurer leur serrage, et par conséquent la connexion elle-même. Cependant, un tel manchon d'accouplement est lourd, encombrant, long à mettre en œuvre et de plus coûteux; de plus sa capacité de serrage, si l'on adopte un mode de réalisation raisonnable, reste d'amplitude modérée, et, étant dépourvue de toute élasticité, limite les possibilités de rattrapage de jeu.

Le manchon d'accouplement pour connecteur de monofibre optique faisant l'objet de la présente invention ne comporte aucun de ces inconvénients.

Il est d'une structure simple, en un seul bloc, sans aucune pièce mobile, et sa mise en place est instantanée. Tout en assurant un axcellent alignement des deux embouts à placer vis-à-vis, il assure par élasticité les rattrapages de jeu axiaux et angulaires. Enfin, il se prête à plusieurs modes avantageux de réalisation.

Plus précisément, l'invention se rapporte à un manchon d'accouplement pour connecteur de monofibre optique, connecteur comportant deux embouts en forme de cylindre, chacun ayant un canal axial pour recevoir une monofibre, manchon muni d'un canal axial pour recevoir les deux embouts du connecteur, caractérisé en ce qu'il comporte une pluralité de mors de serrage longitudinaux, régulièrement répartis autom de son canal axial, suivant un cylindre de diamètre inférieur à celui des embouts les mors étant réunis par une pluralité de profilés longitudinaux, à section intérieure en U, de telle sorte que le manchon présente une élasticité radiale permettant l'alignement de la monofibre d'un embout avec celle de l'autre embout.

L'invention sera mieux comprise à l'aide de la description ciaprès, en s'appuyant sur les figures annexées, où:

— la figure 1 représente, suivant deux vues en coupe, parallèlement et perpendiculairement à son axe, un manchon d'accouplement selon l'art connu,

— la figure 2 représente, suivant deux vues (a) (b) en perspective, un manchon d'accouplement selon l'invention, avant et apres insertion d'un embout,

— la figure 3 représente, vu en section, un autre mode de réalisation du manchon d'accouplement, à trois génératrices de contact,

— la figure 4 représente, vue en section, une variante du mode de réalisation de la figure 3.

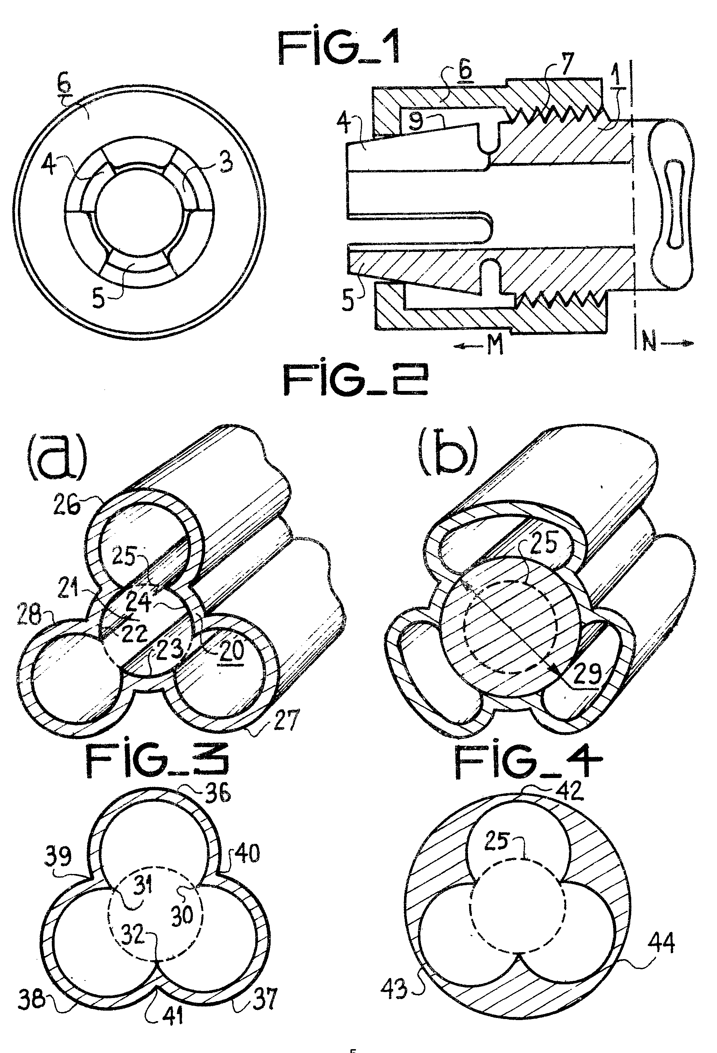

La figure 1 représente, suivant deux vues en coupe, parallèlement et perpendiculairement à son axe, un manchon d'accouplement selon l'art connu.

Il se compose d'un corps tubulaire 1, dans lequel les deux embouts de connecteur, non représentés, doivent être introduits. A chacune de ses extrémités M et N, dont une seule M est représentée par simplification, une pince de serrage à trois mors 3, 4 et 5 a été ménagée.

Les mors peuvent se rapprocher sous l'action d'une bague 6, mobile longitudinalement par vissage et dévissage en 7, dont un bourrelet 8 s'appuie sur la surface externe conique 9 des mors. Les deux embouts ayant respectivement été introduits dans les mors des extrémités M et N, la rotation de la bague 6 assure, suivant un mouvement centripète, le rapprochement des mors 3, 4 et 5 et par conséquent l'accouplement des embouts.

On a déjà indiqué plus haut les inconvénients de ce type de manchon.

La figure 2 représente, suivant deux vues (a) (b) en perspective, un manchon d'accouplement selon l'invention, avant et après l'insertion d'un embout.

Ce manchon comporte un corps 20, avec un canal intérieur 21, pour recevoir deux embouts de connecteur non représentés. Une pince de serrage à trois mors 22, 23 et 24 a été disposée longitudinalement sur la face interne du canal. Les surfaces de serrage des mors sont réunies, suivant un cercle inscrit 25, par trois profilés à section en »U« 26, 27 et 28 constitués d'un matériau élastique.

Un tel manchon d'accouplement fonctionne de la façon suivante: l'introduction des embouts de connecteur à chaque extrémité du manchon, embouts dont le diamètre 29 est choisi supérieur à celui du cercle inscrit 25 du manchon, écarte les mors 22, 23 et 24 de leur position d'equilibre, et applique aux profilés en »U« des forces qui tendent à les ouvrir. Les forces élastiques antagonistes ainsi développées assurent le serrage des mors sur les embouts, donc l'accouplement recherché, avec tous les avantages qui ont éte exposés plus haut.

La figure 3 représente, vu en section, un autre mode de réalisation du manchon d'accouplement, à trois génératrices de contact.

Suivant ce mode, les surfaces de serrage des mors sont réduites sensiblement à trois génératrices 30, 31 et 32. L'avantage en est de permettre de disposer d'arcs élastiques 36, 37 et 38 de dimensions maximales.

De plus, lors de l'introduction, les angles 39, 40 et 41 existant au niveau des génératrices de contact ont tendance à s'ouvrir, en présentant une force élastique supplémentaire à l'ouverture qui vient s'ajouter à celle des arcs élastiques 36, 37 et 38.

La figure 4 représente, vue en section, une variante du mode de réalisation de la figure 3. Suivant cette variante, qui est particulièrement avantageuse dans le cas du choix d'un matériau plastique apte à être moulé, les parties extérieures des profilés en U sont remplies de matière, conférant au manchon d'accouplement une forme générale extérieure cylindrique, particulièrement commode dans les applications. Ce sont les parties amincies 42, 43 et 44 qui dans ce cas assument principalement la fonction d'élasticité caractéristique de l'invention.

On doit observer que, par suite de ses caractéristiques simples, le manchon de l'invention se prête à une fabrication aisée par de nombreux procédés connus: emboutissage, électro-déposition moulage plastique. Aucune »reprise« pour finition après fabrication n'est nécessaire.

Il est, par ailleurs, à remarquer que, dans tout ce qui précède, le manchon d'accouplement de l'invention est de symétrie ternaire, ce qui est justifié par le fait que trois forces radiales égales et réparties à 120° autour d'un cylindre suffisent à définir complètement son équilibre; cependant, la mise en œuvre d'un plus grand nombre de forces radiales régulièrement réparties, suivant par exemple une disposition hexagonale ou octogonale, doit être considérée comme faisant partie de l'invention.

Il est d'autre part, à noter que, par suite de l'elasticité présentée par le manchon de l'invention, celle-ci se prête à la réalisation de connecteurs multivoies, chaque monofibre étant connectée par l'intermédiaire d'un manchon distinct.

Il est enfin, à observer que le rapport entre le diamètre interne réduit avant accouplement, et le diamètre des embouts à introduire, dépend dans chaque cas des matériaux et de leur élasticité propre. La limite à observer dans le choix de ce rapport est celle où le matériau choisi risque d'être porté au-delà de sa limite élastique.

## Revendications

1. Manchon d'accouplement pour connecteur de monofibre optique, connecteur comportant deux embouts cylindriques, chacun ayant un canal axial pour recevoir une monofibre, manchon (20) muni d'un canal axial (21) pour recevoir les deux embouts du connecteur, caractérisé en ce qu'il comporte une pluralité de mors de serrage longitudinaux (22, 23, 24) régulièrement répartis autour de son canal axial, suivant un cylindre (25) de diamètre inférieur à celui des embouts, les mors étant réunis par une pluralité de profilés longitudinaux (26, 27, 28) à section intérieure en U, de telle sorte que le manchon présente une élasticité radiale permettant l'alignement de la monofibre d'un embout avec celle de l'autre embout.

2. Manchon d'accouplement selon la revendication 1, caractérisé en ce que chaque mors de serrage longitudinal n'a sensiblement qu'une droite de contact avec l'embout.

3. Manchon d'accouplement selon l'une des revendications 1 ou 2, caractérisé en ce que le manchon a une surface extérieure en forme de cylindre de même axe que son canal axial.

4. Manchon d'accouplement selon l'une des revendications 1 à 3, caractérisé en ce qu'il est constitué d'un métal.

5. Manchon d'accouplement selon la revendication 4, caractérisé en ce qu'il est réalisé par électro-déposition.

6. Manchon d'accouplement selon l'une des revendications 1 à 3, caractérisé en ce qu'il est constitué d'une matière plastique.

7. Manchon d'accouplement selon l'une des revendications 1 à 6, caractérisé en ce que ladite pluralité est égale à 3, les mors étant répartis à 120° l'un par rapport à l'autre.

8. Manchon d'accouplement selon l'une des revendications 1 à 7, caractérisé en ce qu'il est constitué d'un matériau unique et continu.

9. Connecteur pour fibres optiques comportant au moins deux embouts cylindriques ayant chacun un canal axial pour recevoir une monofibre, caractérisé en ce qu'il comporte au moins un manchon d'accouplement selon l'une des revendications précédentes, ledit manchon permettant l'alignement des embouts deux par deux.

## Patentansprüche

1. Kupplungshülse für optische Monofaser-Verbinder, wobei der Verbinder zwei zylindrische Endstücke umfaßt, die jeweils einen axialen Kanal zur Aufnahme einer Monofaser aufweisen, wobei die Hülse (20) mit einem axialen Kanal (21) zur Aufnahme der beiden Endstücke des Verbinders versehen ist, dadurch gekennzeichnet, daß sie eine Mehrzahl von längsgerichteten Spannbacken (22, 23, 24) umfaßt, die regelmäßig um ihren axialen Kanal herum gemäß einem Zylinder (25) verteilt sind, dessen Durchmesser kleiner als der der Endstücke ist, wobei die Spannbacken durch eine Mehrzahl von längsgerichteten Profilteilen (26, 27, 28) mit einem U-förmigen Innenquerschnitt derart verbunden sind, daß die Hülse eine radiale Elastizität aufweist, welche eine Ausrichtung der Monofaser eines Endstücks mit derjenigen des anderen Endstücks zuläßt.

2, Kupplungshülse nach Anspruch 1, dadurch gekennzeichnet, daß jede längsgerichtete Spannbacke im wesentlichen nur eine Kontaktgerade mit dem Endstück aufweist.

3. Kupplungshülse nach Anspruch 1 oder 2, dadurch gekennzeichnet, daß die Hülse eine zylindrische Außenfläche mit derselben Achse wie ihr axialer Kanal aufweist.

4. Kupplungshülse nach einem der Ansprüche 1 bis 3, dadurch gekennzeichnet, daß sie aus einem Metall gebildet ist.

5. Kupplungshülse nach Anspruch 4, dadurch gekennzeichnet, daß sie durch galvanischen Niederschlag gebildet ist.

6. Kupplungshülse nach einem der Ansprüche 1 bis 3, dadurch gekennzeichnet, daß sie aus einem Plastikmaterial gebildet ist.

7. Kupplungshülse nach einem der Ansprüche 1 bis 6, dadurch gekennzeichnet, daß die Mehrzahl gleich 3 ist und die Spannbacken gegeneinander um 120° versetzt sind.

8. Kupplungshülse nach einem der Ansprüche 1 bis 7, dadurch gekennzeichnet, daß sie aus demselben durchgehenden Material gebildet ist.

9. Verbinder für optische Fasern mit wenigstens zwei zylindrischen Endstücken, die jeweils einen axialen Kanal zur Aufnahme einer Monofaser aufweisen, dadurch gekennzeichnet, daß er wenigstens eine Kupplungshülse nach einer der vorstehenden Ansprüche aufweist, wobei diese Hülse die Ausrichtung der Endstücke zwei zu zwei ermöglicht.

## Claims

1. Coupling sleeve for an optical monofiber connector comprising two cylindrical butt pieces each having an axial channel für receiving a monofiber, the sleeve (20) being provided with an axial channel (21) for receiving the two butt pieces of the connector, characterized in that it comprises a plurality of longitudinal clamping jaws (22, 23, 24) regularly distributed about its axial channel along a cylinder (25) of smaller diameter than that of the butt pieces, the jaws being joined by a plurality of longitudinal profiled members (26, 27, 28) having an inner U-shaped section so that the sleeve has a radial resilience allowing the alignment of the monofiber of one butt piece with that of the other butt piece.

2. Coupling sleeve in accordance with claim 1, characterized in that each longitudinal clamping jaw substantially presents only a straight contact line with the butt piece.

3. Coupling sleeve in accordance with any of claims 1 and 2, characterized in that the sleeve has an outer surface of cylindrical shape having the same axis as its axial channel.

4. Coupling sleeve in accordance with any of claims 1 to 3, characterized in that it is formed of metal.

5. Coupling sleeve in accordance with claim 4, characterized in that it is formed by elektrodepo-sition.

6. Coupling sleeve in accordance with any of claims 1 to 3, characterized in that it is formed of a plastic material.

7. Coupling sleeve in accordance with any of claims 1 to 6, characterized in that said plurality is equal to three, the jaws being distributes at 120° from each other.

8. Coupling sleeve in accordance with any of claims 1 to 7, characterized in that it is formed of a single continuous material.

9. Connector for optical fibers comprising at least two cylindrical butt pieces each having an axial channel for receiving a monofiber, characterized in that it comprises at least one coupling sleeve in accordance with any of the preceding claims, said sleeve allowing the two-by-two alignment of the butt pieces.

0 036 814

# FIG_1

# FIG_2

(a)

(b)

# FIG_3

# FIG_4

5